# EUROPÄISCHE PATENTSCHRIFT

(11) **EP 2 685 539 B1**
(45) Veröffentlichungstag und Bekanntmachung des Hinweises auf die Patenterteilung: **19.12.2018**
(21) Anmeldenummer: 13169113.1
(22) Anmeldetag: 24.05.2013
(51) Int. Cl.: H01M 10/44, H01M 10/46, H01M 16/00, H02J 7/00, H02J 7/35, H02J 9/06, H01M 10/052, H01M 10/06, H02J 3/32

(54) **Energiespeichervorrichtung für eine Photovoltaikanlage und Verfahren zum Betreiben einer Energiespeichervorrichtung einer Photovoltaikanlage**
Energy storage device for a photovoltaic system and method for operating an energy storage device of a photovoltaic assembly
Dispositif d'accumulation d'énergie pour une installation photovoltaïque et procédé de fonctionnement d'un dispositif d'accumulation d'énergie pour une installation photovoltaïque

(30) Priorität: 13.07.2012 DE 102012212328
(43) Veröffentlichungstag der Anmeldung: 15.01.2014
(73) Patentinhaber: Robert Bosch GmbH, 70442 Stuttgart (DE)
(72) Erfinder: May, Johanna, 71634 Ludwigsburg (DE)

(56) Entgegenhaltungen:
- EP-A1- 2 475 070
- EP-A2- 2 254 218
- US-A1- 2004 174 142
- US-A1- 2010 308 765
- US-A1- 2012 025 614
- US-A1- 2012 293 002

## Beschreibung

Die vorliegende Erfindung betrifft eine Energiespeichervorrichtung für eine Photovoltaikanlage sowie ein entsprechendes Verfahren.

### Stand der Technik

In einer Energiespeichervorrichtung für Photovoltaikanlagen werden üblicherweise gleichartige Batterien, z. B. mehrere baugleiche Bleigel-Akkus oder mehrere baugleiche Lithium-Ionen-Akkus desselben Typus verwendet.

Die Anforderungen an die Energiespeicher der Energiespeichervorrichtung, z. B. die Zyklenfestigkeit und kalendarische Lebensdauer, sind entscheidend für den Preis der Energiespeichervorrichtung. Beispielsweise muss ein Energiespeicher einer Energiespeichervorrichtung an einer Photovoltaikanlage im Sommer eine längere Zeit einen hohen Ladezustand und im Winter einen niedrigen Ladezustand tolerieren. Hinzu kommen verbrauchbedingte Mikrozyklen, welche die Lebensdauer der Energiespeicher beeinflussen. Je größer die Zyklenfestigkeit und die kalendarische Lebensdauer sind, desto höher ist der Preis der Energiespeicher.

Die DE 10 2010 019 268 A1 beschreibt eine Vorrichtung, bei der die Batteriebank durch eine Vielzahl von in Reihe geschalteter Batterien oder Batteriegruppen gebildet wird. Eine vorbestimmte Anzahl von den elektrisch zur Plusseite der Photovoltaikanlage hin angeordneten Batterien oder Batteriegruppen ist mit jeweils einem Abgriff oder Anzapfungspol versehen. Einer der Abgriffe wird entsprechend der Höhe eines gewünschten Entladestroms ausgewählt und über einen Trennschalter mit der Plus-Eingangsklemme des Wechselrichters verbunden.

Aus der US 2012/025614 A1 ist ein Stromversorgungssystem, insbesondere eine unterbrechungsfreie Stromversorgung, mit Kondensatoren als Energiespeichereinheiten bekannt.

Der Konferenzbeitrag mit dem Titel "NiFe/Pb - Hybridakkumulatorsystem" (siebtes Nationales Symposium Photovoltaische Solarenergie; 18.- 20. März 1992, Kloster Banz in Staffelstein) offenbart ein Hybridakkumulatorsystem aus Bleiakkumulatoren und NiFe-Akkumulatoren.

Die US 2012/293002 A1 offenbart ein Verfahren, eine Vorrichtung und ein System zum Bereitstellen von Energie aus Batterien, wobei eine zyklische Batterie und eine stand-by-Batterie zum Einsatz kommen.

Aus der US 2004/0174142 A1 ist eine Stromversorgungs- und Verschaltungstechnik zum kontrollierten parallelen Laden und Entladen von Batterien bekannt.

Die US 2010/0308765 A1 zeigt ein Hybridenergiespeichersystem und ein Verfahren zum Stabilisieren der Leistung, die von einer Energiequelle für eine Last bereitgestellt wird.

### Offenbarung der Erfindung

Die vorliegende Erfindung offenbart eine Energiespeichervorrichtung mit den Merkmalen des Patentanspruch 1 und ein Verfahren zum Betreiben einer Energiespeichervorrichtung mit den Merkmalen des Patentanspruch 13.

### Vorteile der Erfindung

Die der vorliegenden Erfindung zu Grunde liegende Erkenntnis besteht darin, in einer Energiespeichervorrichtung mehrere Energiespeicher mit einer unterschiedlichen Zyklenfestigkeit zu verwenden, und gemäß vorherbestimmter Betriebsmodi zu betreiben. Auf diese Weise können Kosten gespart werden, da die Energiespeicher gemäß ihren Vorteilen betrieben werden können. Der erste Energiespeicher wird im ersten Betriebsmodus "normal" Betrieben. Das bedeutet, dass der erste Energiespeicher von der Photovoltaikanlage erzeugte Energie speichert und diese bei Bedarf wieder an Verbraucher abgibt. Das bedeutet, dass der erste Energiespeicher alle Mikrozyklen mitmacht. Im ersten Betriebsmodus wird also der erste Energiespeicher von der Photovoltaikanlage geladen und von den mit der Photovoltaikanlage gekoppelten Verbrauchern wieder entladen. Auch kann Energie in das öffentliche Energieversorgungsnetz eingespeist werden.

Im zweiten Betriebsmodus wird der zweite Energiespeicher, welcher eine niedrigere Zyklenfestigkeit aufweist, verwendet und entladen. Beispielsweise wird der zweite Energiespeicher dann entladen, wenn die Photovoltaikanlage keinen Strom produzieren kann und/oder das öffentliche Energieversorgungsnetz ausgefallen ist. Auch kann der zweite Betriebsmodus ein Betriebsmodus sein, in welchem der erste Energiespeicher einen niedrigen Ladezustand erreicht hat, und nicht weiter entladen werden sollte.

Aufgrund der unterschiedlichen Zyklenfestigkeit des ersten Energiespeichers und des zweiten Energiespeichers können die Kosten für die Energiespeichervorrichtung drastisch gesenkt werden. Ferner kommt es aufgrund der Verwendung von zwei unterschiedlichen Energiespeichers zu einer Erhöhung der Betriebssicherheit, da ein Reserve-Energiespeicher zur Verfügung gestellt wird.

Unter der Zyklenfestigkeit versteht man die Angabe, wie oft ein Energiespeicher entladen und danach wieder aufgeladen werden kann, bis ihre Kapazität einen gewissen Wert unterschreitet.

Vorteilhafte Ausführungsformen und Weiterbildungen ergeben sich aus den Unteransprüchen sowie aus der Beschreibung unter Bezugnahme auf die Figuren.

In einer Ausführungsform ist der erste Betriebsmodus ein Betriebsmodus, in welchem der ersten Energiespeicher und zweite Energiespeicher von der Photovoltaikanlage ladbar sind. Beispielsweise werden der erste Energiespeicher und der zweite Energiespeicher in dem ersten Betriebsmodus geladen, wobei im ersten Betriebsmodus nur der erste Energiespeicher mit der höheren Zyklenfestigkeit auch wieder entladen wird. Der zweite Energiespeicher mit der niedrigeren Zyklenfestigkeit wird dann auf einem hohen Ladezustand gehalten und nicht entladen. Der erste Energiespeicher dient somit dem Eigenverbrauch. Auf diese Weise kann die Energiespeichervorrichtung sehr effizient und kostensparend betrieben werden.

In einer weiteren Ausführungsform ist der zweite Betriebsmodus ein Betriebsmodus, in welchem der erste Energiespeicher und der zweite Energiespeicher nicht von der Photovoltaikanlage ladbar sind. Beispielsweise ist der zweite Betriebsmodus dadurch gekennzeichnet, dass die Photovoltaikanlage keine Energie erzeugt und der erste Energiespeicher und der zweite Energiespeicher nicht ladbar sind. Insbesondere bei dieser Ausführungsform ergeben sich Kostenvorteile, da bei einem nichtenergieerzeugenden Zustand der Photovoltaikanlage keine elektrische Energie aus dem öffentlichen Energieversorgungsnetz bezogen werden muss.

In einer weiteren Ausführungsform ist der zweite Betriebsmodus ein Betriebsmodus, in welchen der erste Energiespeicher einen niedrigen Ladezustand aufweist. Ein niedriger Ladezustand ist beispielsweise definiert als ein Ladezustand, in welcher der Ladezustand z. B. 30% oder weniger der Nennkapazität des Energiespeichers beträgt. Falls der Energiespeicher den niedrigen Ladezustand erreicht hat, wird nur der zweite Energiespeicher entladen. Auf diese Weise kann die Lebensdauer der Energiespeichervorrichtung erhöht werden.

In einer weiteren Ausführungsform ist der zweite Betriebsmodus ein Betriebsmodus, in welchem ein erhöhter Energiebedarf von mit dem ersten Energiespeicher und dem zweiten Energiespeicher gekoppelten Verbrauchern besteht. Beispielsweise wird von der Steuereinrichtung detektiert, dass sehr viele Verbraucher Energie vom ersten Energiespeicher anfordern oder anfordern werden, sodass der Energiespeicher einen sehr hohen Entladestrom zur Verfügung stellen muss. Die Steuereinrichtung schaltet dann den zweiten Energiespeicher dazu, sodass auch der zweite Energiespeicher der Vielzahl von Verbrauchern Energie liefert. Auch durch diese Ausgestaltung kann die Lebensdauer der Energiespeichervorrichtung signifikant verlängert werden.

Erfindungsgemäß sind der erste Energiespeicher und der zweite Energiespeicher als elektrische Akkumulatoren gleichen Typus ausgebildet.

In einer weiteren Ausführungsform sin der erste Energiespeicher und der zweite Energiespeicher als Blei-Akkumulatoren oder als Lithium-Ionen-Akkumulatoren ausgebildet. Der erste und der zweite Energiespeicher können auch z.B. als Li-Ion-Lithiu8m-Cobaltdioxid-Akkumulator, Lithium-Polymer-Akkumulator, Lithium-Mangan-Akkumulator, Lithium-Eisenphosphat-Akkumulator, Lithium-Eisen-Yitrin-Phosphat-Akkumulator, Nickel-Cadmium-Akku, Nickel-Eisen-Akku, Nickel-Wasserstaff-Akkumulator, Nickel-Metallhybrid-Akkumulator, Nickel-Zink-Akkumulator, Bleiakku, Silber-Zink-Akku, Vanadium-Redox-Akkumulator und/oder Zink-Brom-Akku ausgebildet sein. Auch können der Energiespeicher und der zweite Energiespeicher als Schwungrad, Kondensator, supraleitende Spule und/oder als Druckluftspeicher ausgebildet sein.

In einer weiteren Ausführungsform weist der erste Energiespeicher einen höheren Entladestrom als der zweite Energiespeicher auf. Auch auf diese Weise können die Energiespeicher besonders funktionsgerecht verwendet werde, sodass sich auch hierbei eine Kostenersparnis ergibt.

In einer weiteren Ausführungsform sind der erste und der zweite Energiespeicher als Blei-Akkumulatoren ausgebildet, wobei der zweite Energiespeicher im ersten Betriebsmodus auf einem hohen Ladezustand, beispielsweise auf über 80%, insbesondere über 90 % seiner Nennkapazität, geladen wird.

In einer weiteren Ausführungsform sind der erste Energiespeicher und der zweite Energiespeicher als Lithium-Ionen-Akkumulatoren ausgebildet, wobei der zweite Energiespeicher im ersten Betriebsmodus auf einen mittleren Ladezustand, beispielsweise auf 50 - 70% seiner Nennkapazität geladen wird.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird dabei der Fachmann auch Einzelaspekte als Verbesserungen oder Ergänzungen zu der jeweiligen Grundform der vorliegenden Erfindung hinzufügen.

### Kurze Beschreibung der Zeichnungen

Die vorliegende Erfindung wird nachfolgend anhand der in den schematischen Figuren der Zeichnungen angegebenen Ausführungsbeispiele näher erläutert. Es zeigen dabei:
- Fig. 1: ein schematisches Blockdiagramm einer Energiespeichervorrichtung gemäß einer ersten Ausführungsform der vorliegenden Erfindung;
- Fig. 2: ein schematisches zeitliches Leistungsdiagramm eines ersten Energiespeichers und eines zweiten Energiespeichers gemäß einer Ausführungsform der vorliegenden Erfindung;
- Fig. 3: ein schematisches zeitliches Leistungsdiagramm eines ersten Energiespeichers und eines zweiten Energiespeichers gemäß einer Ausführungsform der vorliegenden Erfindung; und
- Fig. 4: ein schematisches Flussdiagram einer Ausführungsform des Verfahrens zum Betreiben einer Energiespeichervorrichtung.

In allen Figuren sind gleiche bzw. funktionsgleiche Elemente und Vorrichtungen - sofern nichts Anderes angegeben ist - mit denselben Bezugszeichen versehen.

### Ausführungsformen der Erfindung

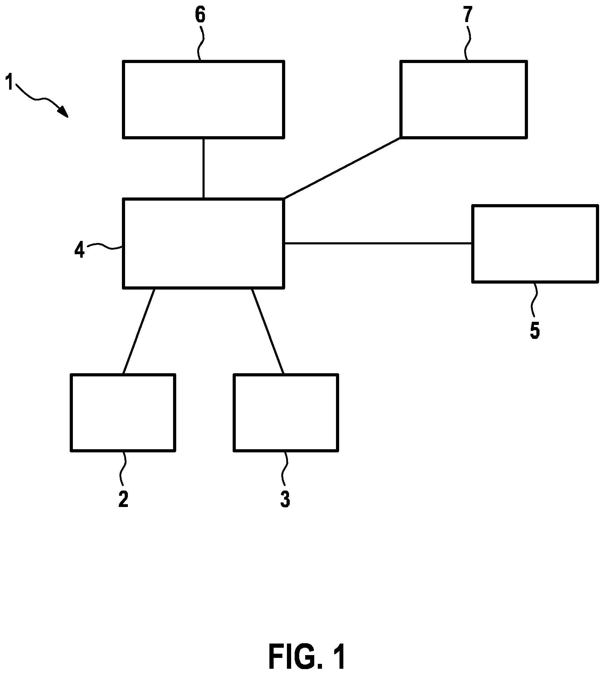

Figur 1 zeigt ein schematisches Blockdiagramm einer Energiespeichervorrichtung 1 gemäß einer ersten Ausführungsform der vorliegenden Erfindung. Die Energiespeichervorrichtung 1 weist einen ersten Energiespeicher 2 mit einer ersten Zyklenfestigkeit und einen zweiten Energiespeicher 3 mit einer zweiten Zyklenfestigkeit auf. Die erste Zyklenfestigkeit des ersten Energiespeichers 2 ist größer als die Zyklenfestigkeit des zweiten Energiespeichers 3. Die Energiespeicher 2 und 3 können beispielsweise als Blei-Akkumulatoren oder als Lithium-Ionen-Akkumulatoren ausgebildet sein.

Der erste Energiespeicher 2 und der zweite Energiespeicher 3 sind elektrisch mit einer Steuereinrichtung 4 gekoppelt. Vorzugsweise weist die Steuervorrichtung einen eigenen Anschluss für Energiespeicher mit hoher Zyklenfestigkeit auf, und einen eigenen Anschluss für Energiespeicher mit einer niedrigen Zyklenfestigkeit auf. Dieser Anschluss kann beispielsweise derart ausgebildet sein, dass für einen korrekten Anschluss nur ein dem Anschluss korrespondierender Stecker in den Anschluss passt, beispielsweise durch eine bestimmte Formgebung. Die Steuereinrichtung 4 weist eine Mensch-Maschinen-Schnittstelle auf, die zur Eingabe von Benutzerdaten zur Festlegung des nachfolgend beschriebenen ersten und/oder des zweiten Betriebsmodus ausgebildet ist.

Ferner ist mit der Steuereinrichtung 4 eine Anlage 6 gekoppelt, welche aus regenerativen Quellen Energie gewinnt. Beispielsweise ist mit der Steuereinrichtung 4 eine Photovoltaikanlage 6 gekoppelt, welche aus Sonnenenergie elektrischen Strom erzeugt. Des Weiteren sind mit der Steuereinrichtung 4 elektrische Verbraucher 5 gekoppelt, welche elektrische Energie verbrauchen. Die Photovoltaikanlage 6 erzeugt elektrischen Strom, welcher direkt an die elektrischen Verbraucher 5 geliefert werden kann, und/oder zum Laden des ersten Energiespeichers 2 und/oder des zweiten Energiespeichers 3 verwendet wird. Ferner ist die Steuereinrichtung 4 mit einem öffentlichen Energieversorgungsnetz 7 gekoppelt.

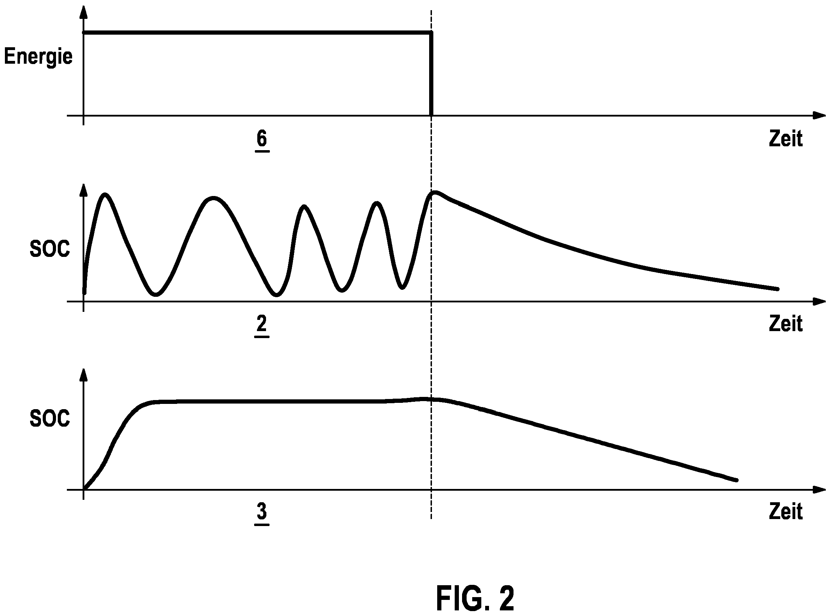

Figur 2 zeigt ein schematisches zeitliches Leistungsdiagramm eines ersten Energiespeichers 2 und eines zweiten Energiespeichers 3 gemäß einer Ausführungsform der vorliegenden Erfindung. Ferner ist zur Veranschaulichung der Funktionsweise der Energiespeichervorrichtung 1 ein Leistungsdiagramm einer Photovoltaikanlage 6 dargestellt.

Das Leistungsdiagramm des Photovoltaikanlage ist oben dargestellt, wobei die vertikale Achse die Leistung der Photovoltaikanlage darstellt und die vertikale Achse die Zeit darstellt.

In der Mitte der Figur 2 ist das Leistungsdiagramm des ersten Energiespeichers 2, und unten ist das Leistungsdiagramm des zweiten Energiespeichers 3 dargestellt. Die vertikale Ache der Leistungsdiagramme der Energiespeicher stellt den Ladezustand (State of Charge / SOC) der Energiespeicher dar.

Man erkennt, dass während die Photovoltaikanlage 6 Strom erzeugt, der erste Energiespeicher 2 geladen und entladen wird. Beispielsweise wird der erste Energiespeicher 2 durch die direkt mit der Steuereinrichtung 4 gekoppelten Verbraucher 5 entladen. Dieser Verbrauch wird auch als Eigenverbrauch bezeichnet. Auch ist es möglich, dass der erste Energiespeicher Energie in ein öffentliches Stromversorgungsnetz 7 einspeist.

Ferner erkennt man, dass während die Photovoltaikanlage 6 Strom erzeugt der zweite Energiespeicher 3 geladen wird. Der zweite Energiespeicher 3 wird jedoch nicht entladen. Dieser Zustand ist beispielsweise der erste Betriebsmodus, in welcher nur der erste Energiespeicher 2 entladen wird.

Ab dem Zeitpunkt, an welcher die Photovoltaikanlage 6 keinen Strom mehr erzeugt, da beispielsweise keine Sonne mehr scheint oder die Wetterbedingungen dies nicht zulassen, wird der erste Energiespeicher 2 und/oder der zweite Energiespeicher 3 entladen.

Die Steuereinrichtung 4 erkennt mittels Sensoren, dass die Photovoltaikanlage 6 keinen Strom mehr erzeugt und schaltet dann den ersten Energiespeicher 2 und den zweiten Energiespeicher 3 frei, sodass diese entladen werden können. Dieser Zustand ist beispielsweise der zweite Betriebsmodus.

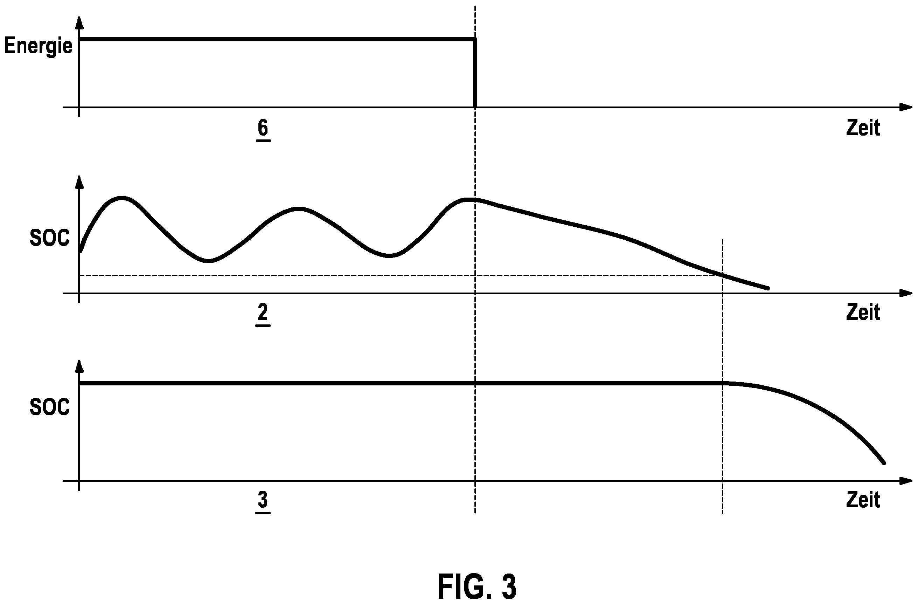

Figur 3 zeigt ein schematisches zeitliches Leistungsdiagramm eines ersten Energiespeichers 2 und eines zweiten Energiespeichers 3 gemäß einer Ausführungsform der vorliegenden Erfindung. In der Figur 3 ist oben ebenfalls wie in Fig. 2 ein Leistungsdiagramm einer Photovoltaikanlage dargestellt. Man erkennt, dass der erste Energiespeicher 2 geladen und entladen wird. Der zweite Energiespeicher 3 ist bereits vollständig geladen, beispielsweise mit Energie aus der Photovoltaikanlage und/oder einem öffentlichem Energieversorgungsnetz. Sobald die Photovoltaikanlage 6 keinen Strom mehr erzeugt, wird der erste Energiespeicher 2 entladen.

Erreicht der Ladezustand des zweiten Energiespeichers 3 einen vorherdefinierten unteren Grenzwert, wird der zweite Energiespeicher 3 freigeschaltet und entladen. Auf diese Weise kann die Lebensdauer der Energiespeichervorrichtung 1 signifikant erhöht werden. Ferner können die Installationskosten gering gehalten werden, da ein Energiespeicher mit einer geringen Zyklenfestigkeit weniger kosten verursacht.

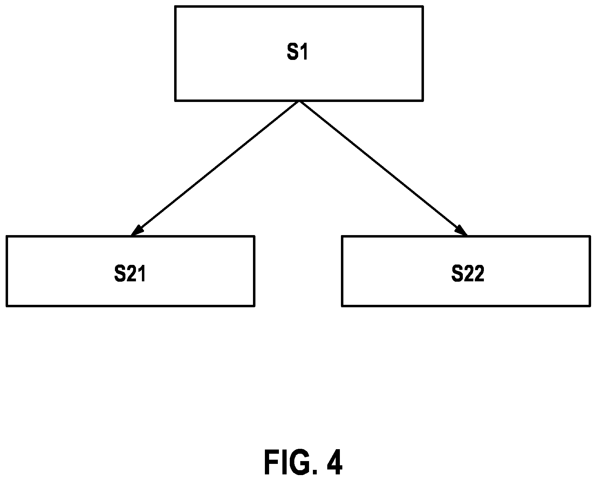

Figur 4 zeigt ein schematisches Flussdiagram einer Ausführungsform eines Verfahrens zum Betreiben einer Energiespeichervorrichtung 1. Im Schritt Sl wird festgelegt, ob die Energiespeichervorrichtung im ersten Betriebsmodus oder im zweiten Betriebsmodus betrieben werden soll. Dann wird die Energiespeichervorrichtung 1 entweder im ersten Betriebsmodus (Schritt S21) oder im zweiten Betriebsmodus (Schritt S22) betrieben.

Obwohl die vorliegende Erfindung anhand bevorzugter Ausführungsbeispiele vorstehend beschrieben wurde, ist sie darauf nicht beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

## Patentansprüche

1. Energiespeichervorrichtung (1) für eine Photovoltaikanlage (6),
mit zumindest einem ersten Energiespeicher (2), welcher eine erste Zyklenfestigkeit aufweist, mit zumindest einem zweiten Energiespeicher (3), welcher eine zweite Zyklenfestigkeit aufweist, wobei die erste Zyklenfestigkeit größer als die zweite Zyklenfestigkeit ist, mit einer Steuereinrichtung (4), welche ausgebildet ist, den ersten Energiespeicher (2) in einem ersten Betriebsmodus zu entladen und den zweiten Energiespeicher (3) in einem zweiten Betriebsmodus zu entladen, wobei die Steuereinrichtung (4) einen ersten, eigenen Anschluss für den ersten Energiespeicher (2), und einen zweiten, eigenen Anschluss für den zweiten Energiespeicher (3) aufweist,
**dadurch gekennzeichnet,**
**dass** die Steuereinrichtung (4) mit elektrischen Verbrauchern (5), welche elektrische Energie verbrauchen, direkt gekoppelt ist, und die Steuereinrichtung (4) zusätzlich mit der Photovoltaikanlage (6), welche aus Sonnenenergie elektrischen Strom erzeugt, gekoppelt ist.

2. Energiespeichervorrichtung (1) nach Anspruch 1,
**dadurch gekennzeichnet,**
**dass** der erste Betriebsmodus ein Betriebsmodus ist, in welchem der erste Energiespeicher (2) und zweite Energiespeicher (3) von der Photovoltaikanlage (6) ladbar sind.

3. Energiespeichervorrichtung (1) nach Anspruch 1 oder 2,
**dadurch gekennzeichnet,**
**dass** der erste Betriebsmodus ein Betriebsmodus ist, in welchem nur der erste Energiespeicher (2) entladen wird.

4. Energiespeichervorrichtung (1) nach einem der vorhergehenden Ansprüche,
**dadurch gekennzeichnet,**
**dass** der erste Betriebsmodus ein Betriebsmodus ist, in welchem der zweite Energiespeicher (3) auf einem hohen Ladezustand gehalten und nicht entladen wird.

5. Energiespeichervorrichtung (1) nach einem der vorhergehenden Ansprüche,
**dadurch gekennzeichnet,**
**dass** der erste Betriebsmodus ein Betriebsmodus ist, in welchem der zweite Energiespeicher (3) geladen wird während die Photovoltaikanlage (6) Strom erzeugt.

6. Energiespeichervorrichtung (1) nach einem der vorhergehenden Ansprüche,
**dadurch gekennzeichnet,**
**dass** der zweite Energiespeicher (3) freigeschaltet und entladen wird, wenn der Ladezustand des ersten Energiespeichers (2) einen vorherdefinierten unteren Grenzwert erreicht.

7. Energiespeichervorrichtung (1) nach einem der vorhergehenden Ansprüche,
**dadurch gekennzeichnet,**
**dass** der zweite Betriebsmodus ein Betriebsmodus ist, in welchem der erste Energiespeicher (2) und der zweite Energiespeicher (3) nicht von der Photovoltaikanlage (6) ladbar sind.

8. Energiespeichervorrichtung (1) nach einem der vorhergehenden Ansprüche,
**dadurch gekennzeichnet,**
**dass** der zweite Betriebsmodus ein Betriebsmodus ist, in welchem der erste Energiespeicher (2) einen niedrigen Ladezustand aufweist.

9. Energiespeichervorrichtung (1) nach einem der vorhergehenden Ansprüche,
**dadurch gekennzeichnet,**
**dass** der zweite Betriebsmodus ein Betriebsmodus ist, in welchem ein erhöhter Energiebedarf von mit dem ersten Energiespeicher (2) und dem zweiten Energiespeicher (3) gekoppelten Verbrauchern (5) besteht.

10. Energiespeichervorrichtung (1) nach einem der vorhergehenden Ansprüche,
**dadurch gekennzeichnet,**
**dass** die Steuereinrichtung (4) eine Mensch-Maschinen-Schnittstelle aufweist, die zur Eingabe von Benutzerdaten zur Festlegung des ersten und/oder des zweiten Betriebsmodus ausgebildet ist.

11. Energiespeichervorrichtung (1) nach einem der vorhergehenden Ansprüche,
**dadurch gekennzeichnet,**
**dass** der Anschluss derart ausgebildet ist, dass für einen korrekten Anschuss nur ein dem Anschluss korrespondierender Stecker in den Anschluss passt, beispielsweise durch eine bestimmte Formgebung.

12. Energiespeichervorrichtung (1) einem der vorhergehenden Ansprüche,
**dadurch gekennzeichnet,**
**dass** die Steuereinrichtung (4) mit einem öffentlichen Energieversorgungsnetz (7) gekoppelt ist.

13. Verfahren zum Betreiben einer Energiespeichervorrichtung (1) einer Photovoltaikanlage (6),
wobei die Energiespeichervorrichtung (1) einen ersten Energiespeicher (2) mit einer ersten Zyklenfestigkeit und einen zweiten Energiespeicher (3) mit einer zweiten Zyklenfestigkeit aufweist,
wobei die erste Zyklenfestigkeit größer als die zweite Zyklenfestigkeit ist,
mit folgenden Verfahrensschritten:
- Festlegen eines ersten Betriebsmodus oder eines zweiten Betriebsmodus;
- Entladen des ersten Energiespeichers (2) in dem ersten Betriebsmodus;
- Entladen des zweiten Energiespeichers (3) in dem zweiten Betriebsmodus,
wobei eine Steuereinrichtung (4), welche zum Entladen des ersten und des zweiten Energiespeichers (2, 3) ausgebildet ist, einen ersten, eigenen Anschluss für den ersten Energiespeicher (2), und einen zweiten, eigenen Anschluss für den zweiten Energiespeicher (3) aufweist,
**dadurch gekennzeichnet, dass**
dass die Steuereinrichtung (4) mit elektrischen Verbrauchern (5), welche elektrische Energie verbrauchen, direkt gekoppelt ist, und die Steuereinrichtung (4) zusätzlich mit der Photovoltaikanlage (6), welche aus Sonnenenergie elektrischen Strom erzeugt, gekoppelt ist.

14. Verfahren nach Anspruch 13,
**dadurch gekennzeichnet,**
**dass** im ersten Betriebsmodus der zweite Energiespeicher (3) auf einem hohen Ladezustand gehalten und nicht entladen wird.

15. Verfahren nach Anspruch 13 oder 14,
**dadurch gekennzeichnet,**
**dass** im ersten Betriebsmodus der zweite Energiespeicher (3) geladen wird während die Photovoltaikanlage (6) Strom erzeugt.

16. Verfahren nach einem der Ansprüche 13 bis 15,
**dadurch gekennzeichnet,**
**dass** der zweite Energiespeicher (3) freigeschaltet und entladen wird, wenn der Ladezustand des ersten Energiespeichers (2) einen vorherdefinierten unteren Grenzwert erreicht.

17. Verfahren nach einem der Ansprüche 13 bis 16,
**dadurch gekennzeichnet,**
**dass** im zweiten Betriebsmodus der erste Energiespeicher (2) und der zweite Energiespeicher (3) nicht von der Photovoltaikanlage (6) ladbar sind.

18. Verfahren nach einem der Ansprüche 13 bis 17,
**dadurch gekennzeichnet,**
**dass** im zweiten Betriebsmodus der erste Energiespeicher (2) einen niedrigen Ladezustand aufweist.

19. Verfahren nach einem der Ansprüche 13 bis 18,
**dadurch gekennzeichnet,**
**dass** im zweiten Betriebsmodus ein erhöhter Energiebedarf von mit dem ersten Energiespeicher (2) und dem zweiten Energiespeicher (3) gekoppelten Verbrauchern (5) besteht.

20. Verfahren nach einem der Ansprüche 13 bis 19,
**dadurch gekennzeichnet,**
**dass** die Steuereinrichtung (4) mit einem öffentlichen Energieversorgungsnetz (7) gekoppelt ist.

## Claims

1. Energy storage apparatus (1) for a photovoltaic installation (6), having at least one first energy store (2), which has a first cycle stability, having at least one second energy store (3), which has a second cycle stability, wherein the first cycle stability is greater than the second cycle stability, having a control device (4), which is designed to discharge the first energy store (2) in a first operating mode and to discharge the second energy store (3) in a second operating mode, wherein the control device (4) has a first separate terminal for the first energy store (2) and a second separate terminal for the second energy store (3),
**characterized in that**
the control device (4) is directly coupled to electrical loads (5), which consume electrical energy, and the control device (4) is additionally coupled to the photovoltaic installation (6), which generates electric current from solar energy.

2. Energy storage apparatus (1) according to Claim 1,
**characterized in that**
the first operating mode is an operating mode in which the first energy store (2) and second energy store (3) can be charged by the photovoltaic installation (6).

3. Energy storage apparatus (1) according to Claim 1 or 2,
**characterized in that**
the first operating mode is an operating mode in which only the first energy store (2) is discharged.

4. Energy storage apparatus (1) according to one of the preceding claims,
**characterized in that**
the first operating mode is an operating mode in which the second energy store (3) is kept at a high state of charge and is not discharged.

5. Energy storage apparatus (1) according to one of the preceding claims,
**characterized in that**
the first operating mode is an operating mode in which the second energy store (3) is charged while the photovoltaic installation (6) generates current.

6. Energy storage apparatus (1) according to one of the preceding claims,
**characterized in that**
the second energy store (3) is activated and discharged when the state of charge of the first energy store (2) reaches a predefined lower limit value.

7. Energy storage apparatus (1) according to one of the preceding claims,
**characterized in that**
the second operating mode is an operating mode in which the first energy store (2) and the second energy store (3) cannot be charged by the photovoltaic installation (6) .

8. Energy storage apparatus (1) according to one of the preceding claims,
**characterized in that**
the second operating mode is an operating mode in which the first energy store (2) has a low state of charge.

9. Energy storage apparatus (1) according to one of the preceding claims,
**characterized in that**
the second operating mode is an operating mode in which there is an increased energy demand from loads (5) coupled to the first energy store (2) and to the second energy store (3).

10. Energy storage apparatus (1) according to one of the preceding claims,
**characterized in that**
the control device (4) has a human-machine interface, which is designed for the input of user data to determine the first and/or the second operating mode.

11. Energy storage apparatus (1) according to one of the preceding claims,
**characterized in that**
the terminal is designed in such a way that, for correct connection, only a plug corresponding to the terminal fits into the terminal, for example due to a specific shaping.

12. Energy storage apparatus (1) according to one of the preceding claims,
**characterized in that**
the control device (4) is coupled to a public energy supply grid (7).

13. Method for operating an energy storage apparatus (1) of a photovoltaic installation (6),
wherein the energy storage apparatus (1) has a first energy store (2) having a first cycle stability and a second energy store (3) having a second cycle stability,
wherein the first cycle stability is greater than the second cycle stability,
having the following method steps:
- determining a first operating mode or a second operating mode;
- discharging the first energy store (2) in the first operating mode;
- discharging the second energy store (3) in the second operating mode,
wherein a control device (4), which is designed to discharge the first and the second energy store (2, 3), has a first separate terminal for the first energy store (2) and a second separate terminal for the second energy store (3),
**characterized in that**
the control device (4) is directly coupled to electrical loads (5), which consume electrical energy, and the control device (4) is additionally coupled to the photovoltaic installation (6), which generates electric current from solar energy.

14. Method according to Claim 13,
**characterized in that**,
in the first operating mode, the second energy store (3) is kept at a high state of charge and is not discharged.

15. Method according to Claim 13 or 14,
**characterized in that**,
in the first operating mode, the second energy store (3) is charged while the photovoltaic installation (6) generates current.

16. Method according to one of Claims 13 to 15,
**characterized in that**
the second energy store (3) is activated and discharged when the state of charge of the first energy store (2) reaches a predefined lower limit value.

17. Method according to one of Claims 13 to 16,
**characterized in that**,
in the second operating mode, the first energy store (2) and the second energy store (3) cannot be charged by the photovoltaic installation (6).

18. Method according to one of Claims 13 to 17,
**characterized in that**,
in the second operating mode, the first energy store (2) has a low state of charge.

19. Method according to one of Claims 13 to 18,
**characterized in that**,
in the second operating mode, there is an increased energy demand from loads (5) coupled to the first energy store (2) and to the second energy store (3).

20. Method according to one of Claims 13 to 19,
**characterized in that**
the control device (4) is coupled to a public energy supply grid (7).

## Revendications

1. Dispositif accumulateur d'énergie (1), destiné à une installation photovoltaïque (6), comprenant au moins un premier accumulateur d'énergie (2), lequel fait preuve d'une première stabilité de cycle, comprenant au moins un deuxième accumulateur d'énergie (3), lequel fait preuve d'une deuxième stabilité de cycle, la première stabilité de cycle étant supérieure à la deuxième stabilité de cycle, comprenant un système de commande (4), lequel est conçu pour décharger le premier accumulateur d'énergie (2) dans un premier mode de fonctionnement et pour décharger le deuxième accumulateur d'énergie (3) dans un deuxième mode de fonctionnement, le système de commande (4) comportant un premier, propre raccordement pour le premier accumulateur d'énergie (2), et un deuxième, propre raccordement pour le deuxième accumulateur d'énergie (3), **caractérisé en ce que** le système de commande (4) est directement connecté sur des consommateurs électriques (5), lesquels consomment de l'énergie électrique et le système de commande (4) est connecté en supplément sur l'installation photovoltaïque (6), laquelle génère du courant électrique à partir d'énergie solaire.

2. Dispositif accumulateur d'énergie (1) selon la revendication 1, **caractérisé en ce que** le premier mode de fonctionnement est un mode de fonctionnement dans lequel le premier accumulateur d'énergie (2) et le deuxième accumulateur d'énergie (3) peuvent être chargés par l'installation photovoltaïque (6).

3. Dispositif accumulateur d'énergie (1) selon la revendication 1 ou 2, **caractérisé en ce que** le premier mode de fonctionnement est un mode de fonctionnement dans lequel seul le premier accumulateur d'énergie (2) se décharge.

4. Dispositif accumulateur d'énergie (1) selon l'une quelconque des revendications précédentes, **caractérisé en ce que** le premier mode de fonctionnement est un mode de fonctionnement dans lequel le deuxième accumulateur d'énergie (3) est maintenu à un niveau de charge élevé et ne se décharge pas.

5. Dispositif accumulateur d'énergie (1) selon l'une quelconque des revendications précédentes, **caractérisé en ce que** le premier mode de fonctionnement est un mode de fonctionnement dans lequel le deuxième accumulateur d'énergie (3) se charge pendant que l'installation photovoltaïque (6) génère du courant.

6. Dispositif accumulateur d'énergie (1) selon l'une quelconque des revendications précédentes, **caractérisé en ce que** le deuxième accumulateur d'énergie (3) est libéré et se décharge lorsque l'état de charge du premier accumulateur d'énergie (2) atteint une valeur limite inférieure préalablement définie.

7. Dispositif accumulateur d'énergie (1) selon l'une quelconque des revendications précédentes, **caractérisé en ce que** le deuxième mode de fonctionnement est un mode de fonctionnement dans lequel le premier accumulateur d'énergie (2) et le deuxième accumulateur d'énergie (3) ne peuvent pas être chargés par l'installation photovoltaïque (6) .

8. Dispositif accumulateur d'énergie (1) selon l'une quelconque des revendications précédentes, **caractérisé en ce que** le deuxième mode de fonctionnement est un mode de fonctionnement dans lequel le premier accumulateur d'énergie (2) est dans un faible état de charge.

9. Dispositif accumulateur d'énergie (1) selon l'une quelconque des revendications précédentes, **caractérisé en ce que** le deuxième mode de fonctionnement est un mode de fonctionnement dans lequel des consommateurs (5) connectés sur le premier accumulateur d'énergie (2) et sur le deuxième accumulateur d'énergie (3) font preuve d'un besoin énergétique élevé.

10. Dispositif accumulateur d'énergie (1) selon l'une quelconque des revendications précédentes, **caractérisé en ce que** le système de commande (4) comporte une interface homme/machine qui est conçue pour la saisie de données utilisateur, destinées à déterminer le premier et/ou le deuxième mode de fonctionnement.

11. Dispositif accumulateur d'énergie (1) selon l'une quelconque des revendications précédentes, **caractérisé en ce que** le raccordement est conçu de telle sorte que pour un raccordement, seul un connecteur correspondant au raccordement s'adapte dans le raccordement, par exemple par une conformation précise.

12. Dispositif accumulateur d'énergie (1) selon l'une quelconque des revendications précédentes, **caractérisé en ce que** le système de commande (4) est connecté sur un réseau public (7) d'alimentation en énergie.

13. Procédé, destiné à faire fonctionner un dispositif accumulateur d'énergie (1) d'une installation photovoltaïque (6), le dispositif accumulateur d'énergie (1) comportant un premier accumulateur d'énergie (2) faisant preuve d'une première stabilité de cycle et un deuxième accumulateur d'énergie (3) faisant preuve d'une deuxième stabilité de cycle,
la première stabilité de cycle étant supérieure à la deuxième stabilité de cycle, comportant les étapes de procédé suivantes, consistant à :
- déterminer un premier mode de fonctionnement ou un deuxième mode de fonctionnement ;
- décharger le premier accumulateur d'énergie (2) dans le premier mode de fonctionnement ;
- décharger le deuxième accumulateur d'énergie (3) dans le deuxième mode de fonctionnement,
un système de commande (4), lequel est conçu pour décharger le premier et le deuxième accumulateurs d'énergie (2, 3), comportant un premier, propre raccordement pour le premier accumulateur d'énergie (2) et un deuxième, propre raccordement pour un deuxième accumulateur d'énergie (3), **caractérisé en ce que** le système de commande (4) est directement connecté sur des consommateurs électriques (5), lesquels consomment de l'énergie électrique et le système de commande (4) est connecté en supplément sur l'installation photovoltaïque (6), laquelle génère du courant électrique à partir de l'énergie solaire.

14. Procédé selon la revendication 13, **caractérisé en ce que** dans le premier mode de fonctionnement, le deuxième accumulateur d'énergie (3) est maintenu à un niveau de charge élevé et ne se décharge pas.

15. Procédé selon la revendication 13 ou 14, **caractérisé en ce que** dans le premier mode de fonctionnement, le deuxième accumulateur d'énergie (3) se charge pendant que l'installation photovoltaïque (6) génère du courant.

16. Procédé selon l'une quelconque des revendications 13 à 15, **caractérisé en ce que** le deuxième accumulateur d'énergie (3) est libéré et se décharge lorsque l'état de charge du premier accumulateur d'énergie (2) atteint une valeur limite inférieure préalablement définie.

17. Procédé selon l'une quelconque des revendications 13 à 16, **caractérisé en ce que** dans le deuxième mode de fonctionnement, le premier accumulateur d'énergie (2) et le deuxième accumulateur d'énergie (3) ne peuvent pas être chargés par l'installation photovoltaïque (6).

18. Procédé selon l'une quelconque des revendications 13 à 17, **caractérisé en ce que** dans le deuxième mode de fonctionnement, le premier accumulateur d'énergie (2) est dans un faible état de charge.

19. Procédé selon l'une quelconque des revendications 13 à 18, **caractérisé en ce que** dans le deuxième mode de fonctionnement, des consommateurs (5) connectés sur le premier accumulateur d'énergie (2) et sur le deuxième accumulateur d'énergie (3) font preuve d'un besoin énergétique élevé.

20. Procédé selon l'une quelconque des revendications 13 à 19, **caractérisé en ce que** le système de commande (4) est connecté sur un réseau public (7) d'alimentation en énergie.
